# EUROPÄISCHE PATENTSCHRIFT

(11) **EP 3 027 095 B1**
(45) Veröffentlichungstag und Bekanntmachung des Hinweises auf die Patenterteilung: **04.07.2018**
(21) Anmeldenummer: 14780549.3
(22) Anmeldetag: 30.07.2014
(51) Int. Cl.: A47J 31/44

(54) **KAFFEETRESTER-AUFFANGBEHÄLTER-EINSATZ**
COFFEE-GROUNDS-COLLECTING-CONTAINER INSERT
INSERT POUR RÉCIPIENT COLLECTEUR DE MARC DE CAFÉ

(30) Priorität: 31.07.2013 AT 6152013
(43) Veröffentlichungstag der Anmeldung: 08.06.2016
(60) Teilanmeldung: 17192628.0
(73) Patentinhaber: Tilbürger, Frank, 27777 Ganderkesee (DE)
(72) Erfinder: Tilbürger, Frank, 27777 Ganderkesee (DE)
(74) Vertreter: Ellmeyer, Wolfgang
(86) Internationale Anmeldenummer: PCT/IB2014/001417
(87) Internationale Veröffentlichungsnummer: WO 2015/015281

(56) Entgegenhaltungen:
- DE-U1- 20 311 272
- DE-U1-202008 011 757

## Beschreibung

Die vorliegende Erfindung betrifft Einsätze für Kaffeetrester-Auffangbehälter von Kaffeemaschinen.

Bei Espresso-Kaffeemaschinen und Kaffeeautomaten mit Mahlwerken neuerer Bauart ist an ihrer Unterseite, oder auch unterhalb der Maschine, in der Regel ein Behälter zum Auffangen des Kaffeetresters vorgesehen - sei es als Lade oder Klappe der Maschine selbst oder getrennt davon, z.B. als Teil eines Möbels, auf dem die Kaffeemaschine steht. Nach dem Brühen des Kaffees mittels Hindurchleiten von üblicherweise ca. 90 °C heißem Wasser durch feingemahlenes Kaffeepulver wird der noch heiße und feuchte Trester von der Maschine in diesen Behälter befördert, d.h. normalerweise einfach herabfallen gelassen. Üblicherweise ist der Auffangbehälter zu diesem Zweck eine Schublade und besteht im Wesentlichen aus Kunststoff oder Metall, z.B. Edelstahl.

Der in der Folge im Behälter abkühlende und somit warm-feuchte Trester stellt einen ausgezeichneten Nährboden für Mikroorganismen, vor allem für Schimmel- und ähnliche Pilze sowie Bakterien dar. Aus diesem Grund muss der Trester-Auffangbehälter in regelmäßigen, kurzen Abständen sorgfältig gereinigt werden, um zu verhindern, dass sich die Mikroorganismen inner- und außerhalb der Kaffeemaschine verbreiten und die Gesundheit der Benutzer gefährden, sowie um unangenehmen Geruch des Tresters zu verhindern. Eine solche regelmäßige Reinigung ist jedoch nicht nur zeitaufwändig, weswegen sie häufig unterlassen wird, sondern verbraucht zudem große Mengen an Wasser und Reinigungsmitteln.

Zur Lösung des Problems wurden bereits mehrere Arten von Einsätzen für den Trester-Auffangbehälter vorgeschlagen, die zumeist entweder aus feuchtigkeitsbeständigem Kunststoff oder auch aus einem saugfähigen Material wie Papier oder Karton bestehen, dadurch vorzugsweise biologisch abbaubar und kompostierbar sind und zusammen mit dem sich darin ansammelnden Kaffeetrester entsorgt werden können. Der Einsatz kann mitunter, z.B. mittels eines Bands oder Gummizugs, am Rand des Auffangbehälters fixiert werden; siehe DE 20 2008 011 757 U1, DE 20 2009 016 898 U1, EP 1.500.612 A1, DE 20 2004 018 686 U1 oder DE 20 2009 008 628 U1.

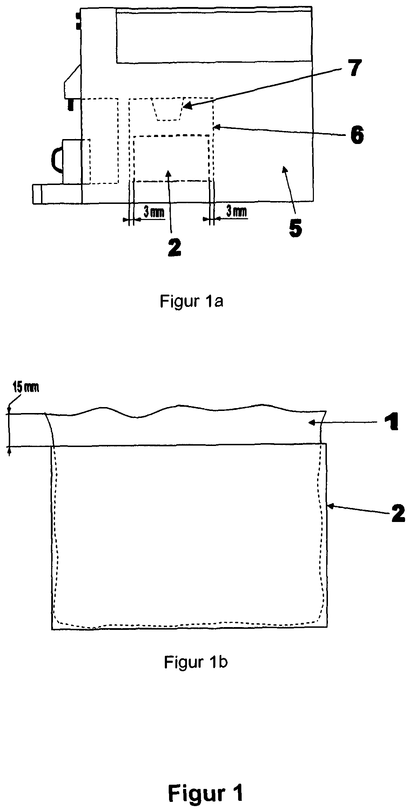

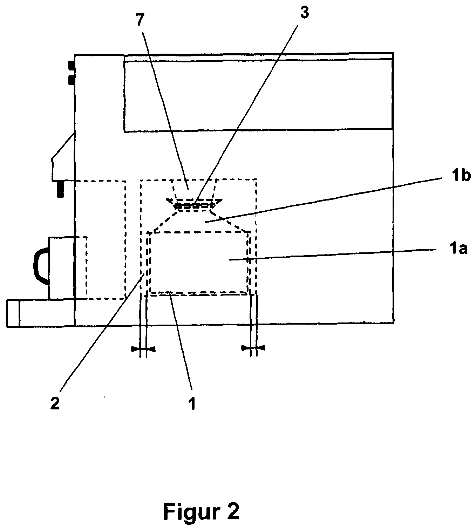

In den Fig. 1a und 1b, die den Fig. 1 und 2 von DE 20 2008 011 757 U1 entsprechen, ist eine Ausführungsform eines Einsatzes gemäß diesem Stand der Technik dargestellt, wobei Bezugszeichen 1 den Einsatz für den Auffangbehälter 2 eines Kaffeeautomaten 5 mit einer Innenwand 6 bezeichnet. Bei dem dargestellten Abstand von zumindest 3 mm zwischen dem Behälter 2 und der Innnenwand 6 kann der Rand des Einsatzes 1 umgeschlagen und gegebenenfalls mit einem Gummiband oder dergleichen am Rand des Behälters 2 befestigt werden. Mit Bezugszeichen 7 wurde hierin zusätzlich der Trester-Abgabestutzen der Kaffeemaschine gekennzeichnet.

Keine dieser obigen Ausführungsformen nach dem Stand der Technik löst jedoch die eingangs geschilderten Probleme zur Gänze:
a) Einerseits wird nur unzureichend verhindert, dass Teile des herabfallenden, feuchten, mitunter klumpigen und damit relativ schweren Tresters entweder gar nicht im Einsatz landen oder mitunter wieder aus diesem herausfallen; z.B. indem Tresterklumpen bei Kontakt mit einer Bodeneinlage gemäß EP 1.500.612 A1 (siehe die Fig. 8-10) von dieser abprallen, dabei zerbrechen und durch Streuung auch neben dem Einsatz landen.
b) Die Verbreitung von unangenehmem Geruch durch den im Einsatz gesammelten Trester ist weiterhin möglich, wenn auch durch partiellen Wasserentzug verzögert.
c) Und eventuell entstandene Schimmelsporen können ebenfalls weiterhin aus dem Sammelbehälter entweichen.

Ziel der Erfindung war es daher, diese Nachteile herkömmlicher Auffangbehältereinsätze zu eliminieren.

### OFFENBARUNG DER ERFINDUNG

Dieses Ziel erreicht die vorliegende Erfindung durch Bereitstellung eines Einsatzes für den Kaffeetrester-Auffangbehälter einer Kaffeemaschine, der als getrennt vom Auffangbehälter vorliegender oder davon lösbarer Einwegartikel ausgeführt ist und dadurch gekennzeichnet ist, dass:
der Einsatz einen in Gebrauch mit dem Auffangbehälter in Kontakt stehenden Auffangteil und einen Verbindungsteil umfasst,
wobei der Auffangteil eine Form aufweist, die im Wesentlichen an die Form des Behälters angepasst oder anpassbar ist, und
der Verbindungsteil sich gegenüber dem Auffangteil nach oben hin verjüngt und zumindest ein Verbindungsmittel zum dichtenden Verbinden des Einsatzes mit einem Trester-Abgabestutzen der Kaffeemaschine umfasst.

Dadurch entfällt nicht nur jegliche Reinigung des Auffangbehälters selbst, da nur der erfindungsgemäße Einsatz entnommen und durch einen frischen Einsatz ersetzt wird, wie dies auch mit bereits bekannten Ausführungsformen möglich war, sondern es wird gemäß vorliegender Erfindung nun auch dafür gesorgt, dass der in den Auffangbehälter herabfallende Kaffeetrester zur Gänze in den Einwegartikel und aus diesem nicht wieder heraus fällt. Zusätzlich werden Geruchsbelästigung und die Verbreitung von Schimmelsporen wirksam unterdrückt bzw. bei entsprechender Wahl des Materials für den Einsatz sogar gänzlich ausgeschaltet.

Durch die Anpassung der Form des Auffangteils an jene des Auffangbehälters wird der Raum optimal genutzt, so dass größere Mengen an Trester darin untergebracht werden können, wodurch dieser seltener ausgewechselt zu werden braucht. Aufgrund der erfindungsgemäßen Verbindbarkeit des Verbindungsteils mit dem Trester-Abgabestutzen der Maschine in dichtender Weise ist ja die Zeitspanne, nach der unangenehme Gerüche oder Schimmelsporen nach außen dringen, enorm verlängert.

Der Verbindungsteil des Einsatzes ist zu diesem Zweck zum Tresterauslass hin hochgezogen und kann diesen dann beispielsweise trichterfömig umgeben, z.B. indem zum oberen Ende hin auf die Verjüngung wieder eine entsprechende Erweiterung des Querschnitts um den Stutzen herum folgt, wie dies auch in der später noch näher erläuterten Fig. 2 dargestellt ist. Durch eine solche Erweiterung kann der Einwegartikel nicht nur einfacher über den Abgabestutzen gezogen werden als bei einem im Wesentlichen gleichbleibenden, relativ engen Querschnitt, sondern es kann auch verhindert werden, dass sich ein Verbindungsmittel zum dichtenden Verbinden des Einsatzes mit dem Abgabestutzen vom Verbindungsteil löst, worauf später noch näher eingegangen wird.

Der Auffangteil kann in seiner Form entweder fix an die Form des Auffangbehälters angepasst sein, wie dies auch für mehrere Einsätze nach dem Stand der Technik beschrieben ist, oder kann an diese "anpassbar" sein. Damit ist gemeint, dass der Einsatz aus einem verformbaren Material besteht - und gegebenenfalls auch um ein gewisses Maß größer als der Behälter selbst ist - und nach dem Einlegen in den Behälter durch manuelles Glattstreifen an dessen Form angeglichen werden kann. Dabei wird natürlich bevorzugt, dass der Einsatz, oder zumindest der Auffangteil, aus einem dünnen, weichen, leicht verformbaren Material besteht, vorzugsweise aus Stoff oder einer dünnen Kunststofffolie. In dieser bevorzugten Ausführungsform liegt der Einsatz besonders bevorzugt in Form eines Stoff- oder Kunststoffbeutels mit (etwas) größerem maximalem Innendurchmesser als der Auffangbehälter vor.

Mit "dichtender Verbindung" ist hierin vor allem gemeint, dass keinerlei Kaffeetrester neben den Einwegartikel der Erfindung fallen kann. Dabei kann es sich vorzugsweise auch um eine im Wesentlichen luftdichte Verbindung handeln, wofür eine spezielle Auswahl an - eben luftdichten - Materialien für den Einwegartikel zu treffen ist, wofür insbesondere Kunststoffolien, z.B. aus hochdichtem Polyethylen (HDPE) oder Polypropylen, in Frage kommen. Durch ein solches im Wesentlichen luftdichtes Material wird nicht nur der Zutritt von Mikroben erschwert, sondern auch das Auftreten unangenehmer Gerüche in der Umgebung der Kaffeemaschine praktisch vollständig vermieden.

Das oder die Verbindungsmittel können prinzipiell beliebige Klebe-, Klemm- oder Druckmittel sein, die dafür sorgen, dass der obere Bereich des Verbindungsteils eng an den äußeren Umfang des Trester-Abgabestutzens angelegt oder angedrückt wird, um ein Verrutschen zu verhindern, damit sich die Verbindung zwischen dem erfindungsgemäßen Einsatz und dem Stutzen nicht während des Betriebs löst. Vorzugsweise sind die Verbindungsmittel aus einem Klebestreifen an der Innenseite des Verbindungsteils an oder nahe dessen oberem Ende, einem um den Umfang des Stutzens herum führbaren Zugband, Draht, Faden oder elastischen Band, einem Ring mit einem dem Außendurchmesser des Stutzens im Wesentlichen entsprechenden Innendurchmesser sowie Kombinationen davon ausgewählt.

In einer dieser bevorzugten Ausführungsformen ist als Verbindungsmittel ein zumindest teilweise in die Wand des Verbindungsteils eingearbeitetes/-r oder durch diese hindurchgeführtes/-r Zugband oder Faden vorgesehen, was im Falle von Stoff- oder Kunststoffbeuteln als Einsatz der Erfindung besonders bevorzugt ist. Das Zugband (oder der Faden oder Draht) ist dabei vorzugsweise nahe dem oberen Rand des Verbindungsteils in diesen eingearbeitet, z.B. kann es rund um den Umfang mehrmals durch die Wand des Verbindungsteils hindurch- und abwechselnd an der Innen und der Außenseite desselben geführt sein, oder auch in einer durch Umklappen des Rands und Vernähen oder Verkleben desselben gebildeten Lasche. In letzterem Fall ist das Zugband, wie dies beispielsweise von Müllsäcken bekannt ist, an einer oder mehreren Stellen von außen zugänglich, und durch Straffziehen und Verknoten des Zugbands oder Verdrillen des Drahtes um den Abgabestutzen herum wird die Verbindung mit dem Einsatz hergestellt.

Alternativ (oder auch zusätzlich) dazu kann als Verbindungsmittel ein elastisches Band an der Außenseite des Verbindungsteils vorgesehen sein, wie z.B. ein herkömmliches Gummiband mit entsprechender Festigkeit und Elastizität, d.h. z.B. ein Gummiband mit einer Dicke von zumindest 2 mm. Um zu verhindern, dass sich das elastische Band vor Gebrauch vom Verbindungsteil des Einsatzes löst, kann es an der Außenseite des Verbindungsteils lösbar fixiert sein, z.B. an einer oder mehreren Stellen mit einer vorzugsweise geringen Menge an Klebstoff punktverklebt sein oder ebenfalls von einer Lasche in der Wand des Verbindungsteils in Position gehalten werden. Alternativ dazu kann in den oberen Rand des Verbindungsteils ein Gummizug eingearbeitet sein, insbesondere wenn der Einsatz oder zumindest der Verbindungsteil aus Stoff besteht. Wenn das Band über ausreichende Elastizität verfügt, kann seine Dimension auch ausreichend klein gewählt werden, so dass es bereits vor Verwendung des Einsatzes in einem geringfügig gedehnten Zustand vorliegt und mit der Wand des Verbindungsteils somit eine reibschlüssige Verbindung eingeht. Zudem kann der Verbindungsteil, wie bereits erwähnt, an seinem Ende erweitert sein, was ebenfalls ein Herabrutschen des elastischen Bandes verhindert.

Analoges wie für das elastische Band - auch in Bezug auf die Befestigung an der Außenseite des Verbindungsteils - gilt für einen Ring als Verbindungsmittel. Dieser ist vorzugsweise vor Gebrauch des Einsatzes mit dessen Außenseite lösbar verbunden und nach Lösen dieser Verbindung relativ zum Einsatz verschiebbar. Die lösbare Verbindung kann erneut mittels punktuellen oder durchgehenden Verklebens des Rings mit der Außenwand des Verbindungsteils - oder des Auffangteils - hergestellt sein.

Der Ring weist vorzugsweise einen Innendurchmesser auf, der der Summe aus dem Außendurchmesser des Trester-Abgabestutzens und der Wandstärke des Verbindungsteils im Wesentlichen entspricht, d.h. besonders bevorzugt nicht mehr als 2 mm, insbesondere nicht mehr als 1 mm, übersteigt. Nach dem Einlegen des erfindungsgemäßen Einsatzes in den Auffangbehälter und Hochziehen des Verbindungsteils über den unteren Rand des Stutzens hinaus, kann durch Hochschieben und Aufziehen des Rings auf den Stutzen auch in diesem Fall eine reibschlüssige Verbindung hergestellt werden, da der Ring die Wand des Verbindungsteils an den äußeren Stutzenumfang drückt.

In besonderen Fällen kann der Ring allerdings auch fix, d.h. nicht relativ zur Außenwand verschiebbar, am Ende des Verbindungsteils vorgesehen sein. Dabei kann er entweder in einer Lasche aus dem Material des Verbindungsteils, z.B. Stoff, untergebracht oder an seiner (bei Verwendung) Unterseite mit dem Material des Verbindungsteils verbunden sein und wird somit zusammen damit auf den Stutzen aufgezogen. In Letzterem Fall kommt beim Aufziehen des Rings auf den Trester-Abgabestutzen das Material des Verbindungsteils allerdings nicht zwischen dem Ring und dem Stutzen zu liegen, weswegen der Innendurchmesser des Rings den Außendurchmesser nur sehr geringfügig zu überschreiten braucht, z.B. um etwa 1 mm oder weniger, je nach dem Ausmaß an Reibung zwischen dem Ring und dem Stutzen. Bei einer sich abwärts verjüngenden Konusform des Stutzens besteht natürlich ein größerer Spielraum für den Ringdurchmesser. Die Reibung sollte in jedem Fall ausreichend hoch sein, damit der Ring nach dem Aufziehen auf den Stutzen nicht wieder von diesem abrutscht, sondern eine reibschlüssige Verbindung damit eingeht.

Der Ring kann jedoch prinzipiell aus beliebigem Material bestehen, solange dieses ausreichende Festigkeit aufweist, damit es während des Aufziehens auf den Stutzen nicht reißt oder bricht, und kann auch eine verstellbare Weite aufweisen, z.B. indem er in der Art einer Schlauchschelle ausgeführt ist. Vorzugsweise handelt es sich dabei jedoch um einen dünnen Ring aus Metall, Holz oder Kunststoff, bei außen liegenden Ringen insbesondere aus einem Kunststoff mit einer gewissen, allerdings eingeschränkten Elastizität, wie z.B. Hartgummi, aus Umweltschutzgründen vorzugsweise aus einem Hartgummi aus Naturkautschuk. Bei einem in einer Lasche am Ende des Verbindungsteils untergebrachten Ring kann jedoch durchaus auch Metall oder Holz zum Einsatz kommen. Aus Kostengründen wird bei eine solchen Einwegartikel jedoch Kunststoff das Material der Wahl sein, was auch Vorteile in Bezug auf die Reibung zwischen Ring und Stutzen birgt.

In besonders bevorzugten Ausführungsformen des erfindungsgemäßen Einsatzes ist der Ring allerdings Teil einer eigenen Einrichtung zur Befestigung des Einsatzes an einer entsprechenden Halterung der Kaffeemaschine oder mit einer solchen Einrichtung fest verbunden. Eine solche Einrichtung kann beispielsweise ein Haken oder eine Öse zur Verbindung mit dem entsprechenden Gegenstück an der Kaffeemaschine sein. Das heißt, der Ring kann z.B. einstückig mit einer Öse ausgebildet sein, die in einen Haken an der Außenseite des Trester-Abgabestutzens eingehängt werden kann, um ein Abrutschen des Rings vom Stutzen zu verhindern.

Vorzugsweise ist jedoch die Einrichtung zum Einsetzen in die zugehörige Halterung an der Kaffeemaschine, z.B. in eine Nut oder Schiene oder einen Rahmen der Halterung, angepasst.

Besonders bevorzugt ist oder umfasst die Einrichtung eine Platte, und der Ring wird durch eine kreisförmige Ausnehmung darin ausgebildet. Das heißt, die Innenseite der Ausnehmung in der Platte stellt den Reibschluss zwischen der Platte und dem Stutzen und somit die dichtende Verbindung her - und stellt daher gleichzeitig den "Ring" dar.

Die Platte selbst kann ihrerseits in einen an der Kaffeemaschine vorgesehenen Rahmen eingesetzt werden, um eine Ablösung des erfindungsgemäßen Einsatzes vom Stutzen gänzlich zu verhindern.

Alternativ oder zusätzlich zu den obigen Ausführungsformen ist in besonders bevorzugten Ausführungsformen als Verbindungsmittel ein Klebestreifen an der Innenseite im Bereich des oberen Rands des Verbindungsteils - oder auch an der Innenseite eines oben beschriebenen Rings - vorgesehen. Noch bevorzugter ist der Klebestreifen mit einer vor Gebrauch abziehbaren Schutzfolie (Trennpapier, "release liner") geschützt. Aus Kostengründen kann diese Ausführungsform als Alternative gegenüber den zuvor genannten mitunter bevorzugt sein. Der Klebestreifen kann beispielsweise durch Beschichtung auf das Material des Verbindungsteils - oder des Rings - aufgebracht werden, oder es kann ein beidseitig klebender Streifen aufgeklebt werden.

Durch die Wahl des Materials, auf das nachstehend noch näher eingegangen wird, wird sichergestellt, dass der Auffangbehältereinsatz gemäß vorliegender Erfindung kostengünstig herstellbar, problemlos entsorgbar und gegebenenfalls auch mit chemischen Mitteln ausrüstbar ist und gleichzeitig ausreichenden Schutz der Umgebung gegen Kontamination mit Mikroorganismen bietet.

Ist der Auffangteil des erfindungsgemäßen Einsatzes im Wesentlichen an die Form des Behälters angepasst, kann er beispielsweise eine entsprechende Wannen-, Kisten- oder Schalenform aufweisen. Diese Ausführungsform bietet vor allem Vorteile, wenn der Auffangbehälter nicht Teil der Maschine selbst ist, sondern in einer Schublade oder Klappe eines Möbels unterhalb der Maschine untergebracht ist. So kann etwa ein Einsatz der Erfindung in eine herkömmliche Schublade einer Kaffeemaschine eingelegt werden. Auch der entsprechend geformte Einwegeinsatz der Erfindung kann in ein in der Schublade bzw. Klappe befindliches Trägergerüst eingehängt oder eingelegt werden und/oder mit Klemmen, Haken, Seil- oder Gummizügen o.dgl. daran bzw. darin befestigt werden, wie dies zum Teil bereits aus dem Stand der Technik bekannt ist.

Der Boden des Auffangteils kann zusätzlich eine Verstärkung bzw. Polsterung des Materials im Bodenbereich (z.B. durch Verwendung einer Art von Luftpolsterfolie) aufweisen, um den Fall von kompaktierten Tresterklumpen in einen frisch ausgetauschten Einsatz zu dämpfen.

Die Herstellung des Einwegartikels gemäß vorliegender Erfindung ist nicht speziell eingeschränkt. Dem Fachmann sind zahlreiche geeignete Verfahren bekannt, um beispielsweise starre Wannen oder flexible Beutel aus dem jeweiligen Material zu erzeugen. Nur zu Illustrationszwecken sei als Beispiel für eine feste Wanne das Formen von Pappe, wie dies etwa zur Herstellung von Eierkartons erfolgt, oder das Schäumen von Kunststoffen, z.B. Polystyrolschaum, genannt und als Beispiel für einen Beutel das (Co-)Extrudieren einer oder mehrerer Lagen von Polymerfolien.

Relativ starre Einsätze der Erfindung, z.B. aus relativ dickwandigem Karton, werden jedoch vorzugsweise durch Ausschneiden oder Ausstanzen eines entsprechenden Faltmusters aus einer Lage des Materials und anschließendes Falten - gegebenenfalls unter Verkleben - des Materials zu einer dreidimensionalen Form hergestellt. Allgemeine Beispiele dafür finden sich unter anderem auch im eingangs zitierten Stand der Technik; ein Beispiel für einen erfindungsgemäßen Einsatz wird jedoch auch nachstehend noch näher beschrieben.

Weiche, leicht verformbare Ausführungsformen des Einsatzes der Erfindung bestehen vorzugsweise aus Stoff oder Kunststofffolie und sind beutelförmig ausgeführt. Dem Fachmann ist bekannt, wie solche Stoff- oder Kunststoffbeutel erzeugt werden. Letztere können beispielsweise analog zu Müllbeuteln gefertigt und mit den erfindungsgemäßen Verbindungsmitteln ausgestattet werden, wie dies oben bereits erwähnt wurde, z.B. durch Umklappen und Verkleben oder Vernähen des Rands zu einer Lasche, innerhalb derer in Zugband, Gummizug oder Ring geführt wird, sowie Aufbringen von Klebstoff, z.B. durch Aufstreichen, Aufspritzen oder dergleichen, oder eines Klebebands, insbesondere eines beidseitigen Klebebands, auf die Außenseite des Verbindungsteils.

In besonders bevorzugten Ausführungsformen der Erfindung umfasst das Material des Einsatzes eine antimikrobielle Ausrüstung, um einen Befall des Tresters mit Pilzen, Bakterien und anderen Mikroorganismen noch wirksamer zu verhindern.

Zu diesem Zweck kann der Einwegartikel eine antimikrobielle Imprägnierung oder Beschichtung aufweisen. Alternativ oder zusätzlich zu einer solchen "nachträglichen" Ausrüstung des Materials des Einsatzes kann dieses aber auch mit einer oder mehreren antimikrobiellen Substanzen chemisch modifiziert sein, d.h. das antimikrobielle Mittel kann bereits bei der Herstellung des Artikels in das Material miteinbezogen werden.

Ohne die Erfindung darauf beschränken zu wollen, seien als für die Imprägnierung oder chemische Modifikation verwendbare antimikrobielle Mittel Morpholin-, Pyrrol- und Azol-Antimykotika gegen Schimmel- und anderen Pilzbefall sowie Tetracyclin- und Makrolid-Antibiotika gegen Bakterien erwähnt.

Das Material selbst ist, wie zuvor festgestellt, ein wärme- und feuchtigkeitsbeständiges Papier-, Stoff- oder Polymermaterial oder ein Gemisch einer oder mehrerer dieser Materialien oder in manchen Fällen auch mit anderen Materialien, wie z.B. Metallen, und kann somit ein mehrlagiges Verbundmaterial sein. Dabei können auch mehrere Lagen desselben Materials vorgesehen sein, insbesondere im Falle von Papiermaterial. Vorzugsweise ist das Material biologisch abbaubar, um eine umweltfreundliche Entsorgung des Einwegartikels zu gewährleisten.

Das jeweils am besten geeignete Material für die gewünschte Form des erfindungsgemäßen Einsatzes kann der einschlägige Fachmann ohne übermäßiges Experimentieren, sondern durch einfache Routineversuche ermitteln.

Unter Papier sind hierin nicht nur, aber vor allem, stärkere Ausführungsformen wie Karton oder Pappe zu verstehen, da das Flächengewicht und damit die Dicke des Papiermaterials ausreichend hoch sein sollte, um ein Hindurchsickern von Feuchtigkeit zumindest für eine gewisse Zeitspanne zu verhindern. Da ohnehin keine scharfen Grenzen zwischen Papier, Karton und Pappe gezogen werden können, werden hierin alle drei mit dem Ausdruck "Papiermaterial" zusammengefasst.

Anstelle oder zusätzlich zu einer Erhöhung der Grammatur umfasst das Papiermaterial aber vorzugsweise eine Wasserfestausrüstung, z.B. eine Beschichtung oder Imprägnierung mit Harz oder dergleichen, oder eine auflaminierte Kunststoff- oder Metallfolie als zweite Lage des Materials. Papiermaterial kommt vorzugsweise in Ausführungsformen der Erfindung zum Einsatz, in denen der Auffangteil des Einsatzes Wannen-, Kisten- oder Schalenform besitzt.

Als Stoffe eignen sich alle bekannten Gewebe oder Vliesstoffe, vorzugsweise solche aus Naturfasern, wie z.B. Baumwolle oder Leinen. Zur Herstellung ausreichender Feuchtigkeitsbeständigkeit werden Naturfasern als Material für den Einwegartikel der Erfindung in der Regel entsprechend behandelt sein. Bei Verwendung bestimmter wasserundurchlässiger Gewebe aus Kunstfasern, wie z.B. aus PTFE (vgl. Gore-Tex®) oder verschiedenen Polyestern, kann eine solche Behandlung entfallen.

Ähnliches gilt für die einsetzbaren Polymermaterialien, womit hierin - im Gegensatz zu Papiermaterial und Stoffen - Polymerfolien oder -filme gemeint sind. Vorzugsweise werden hierfür natürliche Polymere, wie z.B. Cellulose, Stärke und andere Polysaccharide, bzw. modifizierte Vertreter davon, wie z.B. Celluloseacetat, thermoplastische Stärke bzw. Stärkeblends, Polyhydroxyfettsäuren, Proteine, Chitosan u.dgl., eingesetzt, obwohl gemäß vorliegender Erfindung durchaus auch synthetische Polymere zum Einsatz kommen können. Beispiele für Letztere sind etwa Polymere von Milchsäure, wie z.B. Milchsäure-Homopolymere oder auch Copolymere mit Glykolsäure, die gut biologisch abbaubar und mitunter sogar wasserlöslich sind. In diesen Fällen braucht lediglich eine Foliendicke gewählt zu werden, die ausreicht, damit der feuchte Trester die Folie nicht lokal zur Gänze auflöst, d.h. kein Loch in der Folie entsteht, bevor der Einwegartikel ausgetauscht wurde.

Mit "feuchtigkeitsbeständig" ist hierin nämlich gemeint, dass zumindest für die Zeitspanne des Gebrauchs des Einwegartikels der Erfindung, d.h. bis zum nächsten Austausch, also z.B. 6, 12 oder 24 h lang, dessen Material keine Feuchtigkeit austreten lässt, d.h. durch Feuchtigkeit nicht so rasch zersetzt wird, dass Löcher darin entstehen - obwohl es prinzipiell durchaus wasserlöslich sein kann.

Unter "wärmebeständig" ist zu verstehen, dass das Material den Temperaturen des heißen Kaffeetresters standhalten können muss, d.h. Temperaturen von - zumindest kurzfristig - bis zu 90 °C, bevor sich der Trester im Einwegartikel entsprechend abgekühlt hat.

Beide Eigenschaften werden zwar insbesondere durch die Wahl des Materials selbst sowie dessen Dicke bestimmt, können aber auch durch entsprechende Behandlung des Materials, d.h. eine Wärmebeständigkeits- bzw. Wasserfestausrüstung,ähnlich wie die oben besprochene antimikrobielle Ausrüstung, herbeigeführt werden.

Alle diese Ausrüstungen können sowohl nachträgliche Behandlungen des ansonsten fertigen Materials oder auch erst des bereits geformten Einwegartikels, wie z.B. durch Imprägnierung oder Beschichtung, als auch Modifikationen der Ausgangsmaterialien umfassen. Speziell bei Verwendung von Polymermaterialien können Mittel zur Erhöhung der Hitze- oder Wasserfestigkeit oder auch Biozide bereits in die zum Folienziehen verwendete Masse eingearbeitet oder sogar an die Polymerketten selbst an- oder in diese eingebunden werden; Letzteres z.B. durch kovalente Seitenkettenmodifikation oder Copolymerisation entsprechend reaktiver oder funktionalisierter Comonomere in die Hauptkette, z.B. durch Blockcopolymerisation.

Zur Wärmebeständigkeitsausrüstung kann beispielsweise ein Substrat aus Papiermaterial mit einer Beschichtung aus hitzebeständigem Kunststoff, wie z.B. Polyimid, oder Metall versehen oder mit einer Folie daraus an der Innenseite laminiert werden.

### KURZBESCHREIBUNG DER ZEICHNUNGEN

Nachstehend wird die vorliegende Erfindung anhand von nichteinschränkenden bevorzugten Ausführungsformen unter Bezugnahme auf die beiliegenden Zeichnungen näher beschrieben.

Davon zeigt Fig. 1 eine Ausführungsform eines Einsatzes nach dem Stand der Technik, und die Fig. 2 bis 5 illustrieren Ausführungsformen gemäß vorliegender Erfindung.

### DETAILLIERTE BESCHREIBUNG DER ERFINDUNG

In Fig. 1 ist in Fig. 1a schematisch eine herkömmliche Kaffeemaschine 5 nach dem Stand der Technik gemäß DE 20 2008 011 757 U1 dargestellt, die unter anderem in einem von außen zugänglichen (in der Regel mit einer Klappe verschlossenen) Innenraum mit einer Innenwand 6, einen Trester-Abgabestutzen 7 und einen darunter angeordneten Auffangbehälter 2 umfasst.

In Fig. 1b ist ein Einsatz 1 für den Auffangbehälter 2 dargestellt, der geringfügig über den Rand des Behälters ragt und zum Zwecke des Umschlagens des Randes des Einsatzes um den Behälterrand vorzugsweise mindestens 15 mm weit überstehen sollte. Hierzu ist weiters der in Fig. 1 a dargestellte Abstand von zumindest 3 mm zwischen dem Behälter 2 und der Innnenwand 6 der Maschine erforderlich. Der umgeschlagene Einsatz-Rand kann dann gegebenenfalls mit einem Gummiband oder dergleichen am Behälterrand befestigt werden.

Unter Zugrundelegung dieser Darstellung aus Fig. 1a zeigt Fig. 2 eine Ausführungsform eines erfindungsgemäßen Auffangbehälter-Einsatzes 1. Wie zu erkennen ist, umfasst dieser einen Auffangteil 1a, der in seiner Form an die Form des Behälters 2 angepasst ist - wie dies auch aus dem Stand der Technik bekannt war -, der jedoch oberhalb desselben in einen Verbindungsteil 1b übergeht, der mit einem Verbindungsmittel 3 mit dem Stutzen 7 verbunden ist.

In der hier dargestellten Ausführungsform kann das Verbindungsmittel 3 beispielsweise ein Gummiband, ein Hartgummiring oder auch ein größenverstellbarer Ring, ähnlich einer Rohr- oder Schlauchschelle sein. Es kann vor Gebrauch an der Außenseite des Einsatzes 1, vorzugsweise des Verbindungsteils 1a, fixiert sein, z.B. punktverklebt, wie oben erwähnt, um eine Ablösung vor Verwendung zu verhindern.

Allerdings ist in diesem Fall das obere Ende des Verbindungsteils 1a erweitert dargestellt, z.B. durch Einarbeitung eines Kunststoffrings oder Drahtes in das Material des Einsatzes, was eine Trennung von Einsatz 1 und Verbindungsmittel 3 ohnehin praktisch unmöglich macht.

Aus Fig. 2 geht nicht hervor, ob der erfindungsgemäße Einsatz 1 aus einem relativ steifen Material, wie z.B. Karton, oder einem weichen Material, wie z.B. Stoff oder Kunststofffolie, handelt. Die Erfindung ist diesbezüglich auch nicht speziell eingeschränkt, wie dies oben bereits ausführlich erläutert wurde.

Dem Fachmann ist jedenfalls klar, dass mit einer solchen Ausführungsform der Erfindung gemäß Fig. 2 jeglicher Trester aus dem Stutzen 7 nur in den erfindungsgemäßen Einsatz 1 - und nicht wieder aus diesem heraus - fallen kann. Selbst wenn kein im Wesentlichen luftdichtes Material zum Einsatz kommt, ist die Verbreitung von unangenehmen Gerüchen oder Schimmelsporen gegenüber dem Stand der Technik wirksam unterdrückt.

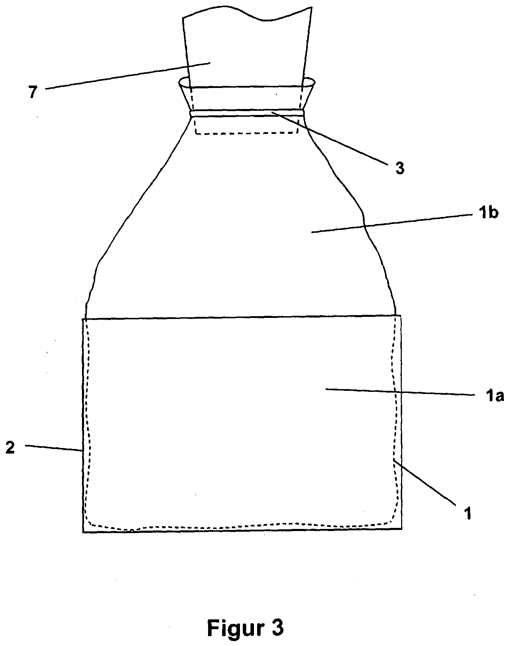

Fig. 3 zeigt eine Ausführungsform aus weichem Material in gegenüber Fig. 2 vergrößerter Darstellung.

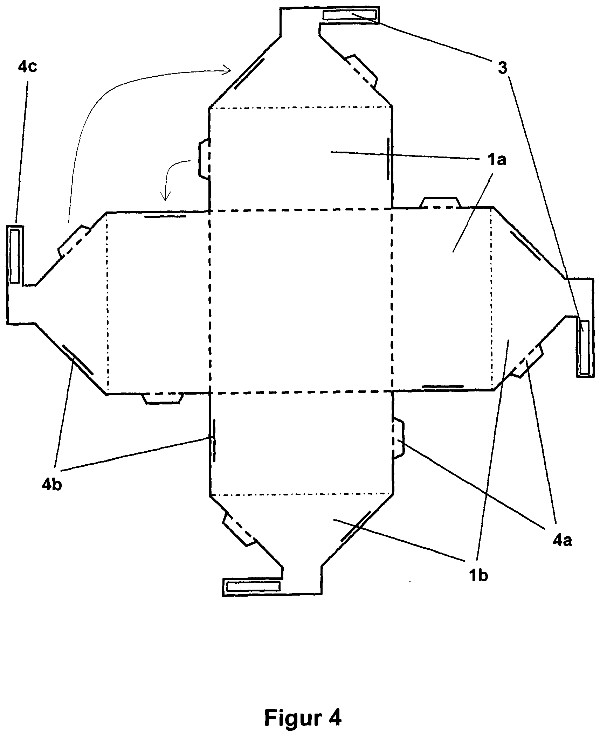

In Fig. 4 ist hingegen eine bevorzugte Ausführungsform eines erfindungsgemäßen Einsatzes aus relativ steifem Material, wie z.B. dickerem Kunststoff oder Karton, in der Form dargestellt, wie sie aus einem Bogen oder einer Bahn des Materials ausgeschnitten oder -gestanzt werden kann. In diesem Fall besitzt der Einsatz 1 eine quadratische Grundfläche, die Erfindung ist jedoch nicht darauf beschränkt, zumal die Form eines erfindungsgemäßen Einsatzes 1 aus einem relativ steifem Material von der Form des Auffangbehälters 2 abhängt.

Die das Quadrat begrenzenden strichlierten Linien zeigen die Faltkanten an, an denen der Auffangteil 1a hochzufalten ist, während die strichpunktierten Linien die Knickstellen anzeigen, an denen der Verbindungsteil 1b beginnt, sich nach oben zum Stutzen 7 hin zu verjüngen.

Sowohl der Auffangteil 1a als auch der Verbindungsteil 1b umfassen in der hier gezeigten Ausführungsform Erweiterungen 4a und entsprechende Schlitze 4b, mittels dessen die vier Flügel miteinander verbunden werden können, indem reihum jeweils eine Erweiterung 4a eines Flügels in den entsprechenden Schlitz 4b des nächsten Flügels gesteckt wird, wie dies durch die beiden Pfeile angedeutet ist, um dadurch den Einsatz nach dem Zusammenbau zu stabilisieren. Die (Pfeil-)Richtungen bei der Verbindung des Auffangteils 1a und des Verbindungsteils 1b sind vorzugsweise entgegengesetzt, um die Stabilität des fertigen Einsatzes 1 noch weiter zu erhöhen. Um die Handhabung zu vereinfachen, kann jedoch auch in beiden Fällen in die gleiche Richtung gearbeitet werden, oder es kann auch eine Ebene von Verbindungen zwischen den Flügeln fehlen, sei es jene im Auffangteil, da dieser ohnehin im Auffangbehälter 2 steht bzw. steckt, oder auch jene im Verbindungsteil, da beim Entfernen des trestergefüllten Einsatzes dieser ohnehin durch die Schwerkraft straffgezogen wird.

Weiters ist Fig. 4 zu entnehmen, dass in dieser bevorzugten Ausführungsform alle vier Flügel jeweils in einem (bei Verwendung) horizontalen Fortsatz 4c münden, an dessen Innenseite je ein Klebestreifen 3 vorgesehen ist. Diese Klebestreifen dienen einerseits als Mittel zum Verbinden des Einsatzes mit dem Stutzen, andererseits aber auch zum abschließenden Verbinden der vier Flügel miteinander. Beim Anbringen des erfindungsgemäßen Einsatzes 1 am Stutzen der Kaffeemaschine werden nämlich die vier Fortsätze 4c nacheinander und einander überlappend um den Stutzen herum geführt - in diesem Fall, von unten gesehen, gegen den Uhrzeigersinn. Je nach Durchmesser des Stutzens und Länge der Fortsätze 4c haftet dadurch zumindest der erste Fortsatz 4c direkt am Stutzen 7 an, und die drei folgenden auch (zumindest teilweise) am Stutzen oder (auch) auf dem jeweils vorhergehenden Fortsatz, wodurch ein stabiler Ring rund um den Stutzen und eine dichte Verbindung zwischen Einsatz 1 und Stutzen 7 gebildet wird.

Anstelle der einstückigen Ausführungsform aus Fig. 4 kann ein erfindungsgemäßer Einsatz natürlich auch aus mehreren - z.B. miteinander verklebten (oder im Falle von Stoff auch vernähten) Teilen bestehen, was u.a. ermöglicht, den Auffangteil 1a aus einem anderen, z.B. dickeren, Material zu fertigen als den Verbindungsteil 1b.

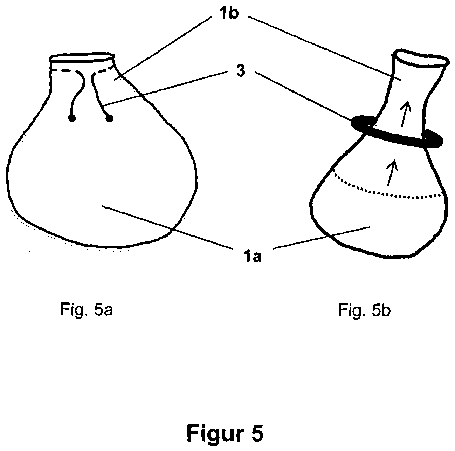

In Fig. 5 sind schließlich zwei weitere Ausführungsformen der Erfindung in Beutelform schematisch dargestellt.

In Fig. 5a ist das Verbindungsmittel 3 ein mehrfach durch die Wand des Verbindungsteils 1b hindurchgeführtes Zugband, dessen Enden verstärkt dargestellt sind, z.B. mittels Knoten oder Perlen, um das Straffziehen des Zugbands zu erleichtern.

In Fig. 5b ist das Verbindungsmittel 3 ein relativ zum Verbindungsteil 1b verschiebbarer äußerer Ring, wie dies durch die Pfeile angedeutet ist. Die punktierte Linie zeigt die Position an, wo der Ring vor Gebrauch mittels Klebstoff an der Wand des Verbindungsteils 1b fixiert war - bzw. an der Wand des Auffangteils 1a: In Abhängigkeit von der speziellen Gestalt beutelförmiger Ausführungsformen kann der Übergang zwischen den beiden Teilen des erfindungsgemäßen Einsatzes 1 fließend sein.

Die vorliegende Erfindung bietet somit eine kostengünstige und vergleichsweise einfach zu realisierende Möglichkeit, eine aufwändige Reinigung der Kaffeetrester-Auffangbehälter von Kaffeemaschinen zu vermeiden und Mikrobenkontamination dennoch wirksam zu verhindern, da sie durch die direkte Verbindung zwischen Einsatz und Trester-Abgabestutzen dafür sorgt, dass in den Auffangbehälter herabfallender Kaffeetrester zur Gänze in den entsprechenden Einsatz und nicht wieder aus diesem heraus fällt und Geruchsbelästigung oder Pilzsporenverbreitung effizient unterdrückt wird.

## Patentansprüche

1. Einsatz für den Kaffeetrester-Auffangbehälter einer Kaffeemaschine, der als getrennt vom Auffangbehälter vorliegender oder davon lösbarer Einwegartikel ausgeführt ist, **dadurch gekennzeichnet, dass:**
der Einsatz (1) einen in Gebrauch mit dem Auffangbehälter (2) in Kontakt stehenden Auffangteil (1a) und einen Verbindungsteil (1b) umfasst,
wobei der Auffangteil (1a) eine Form aufweist, die im Wesentlichen an die Form des Behälters (2) angepasst oder anpassbar ist, und
der Verbindungsteil (1b) sich gegenüber dem Auffangteil (1a) nach oben hin verjüngt und zumindest ein Verbindungsmittel (3) zum dichtenden Verbinden des Einsatzes (1) mit einem Trester-Abgabestutzen (7) der Kaffeemaschine umfasst.

2. Einsatz nach Anspruch 1, **dadurch gekennzeichnet, dass** das oder die Verbindungsmittel (3) aus einem Klebestreifen an der Innenseite des Verbindungsteils (1b) an oder nahe dessen oberem Ende, einem um den Umfang des Stutzens (7) herum führbaren Zugband, Faden oder elastischen Band, einem Ring mit einem dem Außendurchmesser des Stutzens (7) im Wesentlichen entsprechenden Innendurchmesser und Kombinationen davon ausgewählt ist/sind.

3. Einsatz nach Anspruch 2, **dadurch gekennzeichnet, dass** als Verbindungsmittel (3) folgendes vorgesehen ist:
a) ein zumindest teilweise in die Wand des Verbindungsteils (1b) eingearbeitetes/-r oder durch diese hindurchgeführtes/-r Zugband oder Faden; oder
b) ein elastisches Band an der Außenseite des Verbindungsteils (1b); oder
c) an der Außenseite des Verbindungsteils (1b) ein Ring vorgesehen ist, der einen Innendurchmesser aufweist, der der Summe aus dem Außendurchmesser des Stutzens (7) und der Wandstärke des Verbindungsteils (1b) im Wesentlichen entspricht.

4. Einsatz nach Anspruch 3, Merkmal c), **dadurch gekennzeichnet, dass** der Ring (3) vor Gebrauch des Einsatzes mit dessen Außenseite lösbar verbunden ist und nach Lösen dieser Verbindung relativ zum Einsatz verschiebbar ist.

5. Einsatz nach Anspruch 4, **dadurch gekennzeichnet, dass** die lösbare Verbindung eine Klebeverbindung ist.

6. Einsatz nach Anspruch 3, Merkmal c), **dadurch gekennzeichnet, dass** der Ring (3) mit dem Ende des Verbindungsteils (1b) fest verbunden ist und zusammen damit auf den Stutzen (7) aufziehbar ist.

7. Einsatz nach Anspruch 6, **dadurch gekennzeichnet, dass** der Ring (3) Teil einer Einrichtung zur Befestigung des Einsatzes an einer entsprechenden Halterung der Kaffeemaschine ist oder mit einer solchen Einrichtung fest verbunden ist.

8. Einsatz nach Anspruch 7, **dadurch gekennzeichnet, dass** die Einrichtung zum Einsetzen in die Halterung der Kaffeemaschine angepasst ist.

9. Einsatz nach Anspruch 8, **dadurch gekennzeichnet, dass** die Einrichtung eine Platte ist oder umfasst und der Ring durch eine kreisförmige Ausnehmung darin ausgebildet ist.

10. Einsatz nach einem der Ansprüche 2 bis 9, **dadurch gekennzeichnet, dass** als Verbindungsmittel (3) zumindest ein mit einer bei Gebrauch abziehbaren Folie geschützter Klebestreifen vorgesehen ist.

11. Einsatz nach einem der vorangegangenen Ansprüche, **dadurch gekennzeichnet, dass** er zumindest im Wesentlichen aus wärme- und feuchtigkeitsbeständigem Papier-, Stoff- oder Polymermaterial oder einem Gemisch davon besteht.

12. Einsatz nach Anspruch 5, **dadurch gekennzeichnet, dass** das Material biologisch abbaubar ist.

13. Einsatz nach Anspruch 11 oder 12, **dadurch gekennzeichnet, dass** das Material im Wesentlichen luftdicht ist.

14. Einsatz nach Anspruch 13, **dadurch gekennzeichnet, dass** das Material eine im Wesentlichen luftdichte Kunststoffolie umfasst.

15. Einsatz nach einem der Ansprüche 11 bis 14, **dadurch gekennzeichnet, dass** das Material zumindest im Bereich des Auffangteils (1a) eine antimikrobielle Imprägnierung oder Beschichtung aufweist.

## Claims

1. An insert for the coffee grounds collection container of a coffee machine, implemented as a disposable article separate or removable from said collection container, **characterized in that**
said insert (1) comprises a collection part (1a), which, when in use, contacts said collection container (2), and a connecting part (1b),
said collection part (1a) having a shape which is essentially adapted or adaptable to the shape of the container (2), and
said connecting part (1b) being tapered towards its upper end relative to said collection part (1a) and comprising at least one connecting means (3) for sealingly connecting said insert (1) to a coffee grounds outlet nozzle (7) of the coffee machine.

2. The insert according to claim 1, **characterized in that** said connecting means (3) is/are selected from an adhesive tape on the interior of said connecting part (1b) at or near its upper end, a strap, a thread or an elastic band running along the circumference of the nozzle (7), a ring having an inner diameter essentially corresponding to the outer diameter of the nozzle (7), and combinations of these.

3. The insert according to claim 2, **characterized in that**
a) a strap or thread which is at least partially wrought into the wall of the connecting part (1b) or at least partially runs through said wall; or
b) an elastic band on the exterior of the connecting part (1b); or
c) a ring having an inner diameter essentially corresponding to the sum of the outer diameter of the nozzle (7) and the wall thickness of the connecting part (1b) on the exterior of the connecting part (1b)
is provided as said connecting means (3).

4. The insert according to claim 3, feature c), **characterized in that** said ring (3) is releasably connected to the exterior of said insert before the insert is used and is slidable in relation to said insert when said connection has been released.

5. The insert according to claim 4, **characterized in that** said releasable connection is an adhesive connection.

6. The insert according to claim 3, feature c), **characterized in that** said ring (3) is fixedly connected to the end of said connecting part (1b) and may be fit to the nozzle (7) together with the same.

7. The insert according to claim 6, **characterized in that** said ring (3) is part of a device for fixing said insert to a corresponding mounting of the coffee machine or is fixedly connected to such a device.

8. The insert according to claim 7, **characterized in that** said device is adapted for being inserted into the mounting of the coffee machine.

9. The insert according to claim 8, **characterized in that** said device is or comprises a plate and said ring is formed as a circular recess in said plate.

10. The insert according to any one of the claims 2 to 9, **characterized in that** at least one adhesive tape protected by a releasable liner is provided as said connecting means (3).

11. The insert according to any one of the preceding claims, **characterized in that** said insert essentially consists of a heat and moisture resistant paper, fabric or polymer material or a mixture thereof.

12. The insert according to claim 5, **characterized in that** the material is biodegradable.

13. The insert according to claim 11 or claim 12, **characterized in that** the material is essentially air-tight.

14. The insert according to claim 13, **characterized in that** the material comprises an essentially air-tight plastic film.

15. The insert according to any one of the claims 11 to 14, **characterized in that** the material has an antimicrobial impregnation or coating at least in the area of the collection part (1a).

## Revendications

1. Insert pour le récipient collecteur du marc de café d'une machine à café, qui est réalisé comme article jetable séparé du récipient collecteur ou pouvant être détaché de celui-ci, **caractérisé en ce que**
l'insert (1) comprend une pièce (1a) collectrice, en contact avec le récipient (2) collecteur au moment de l'utilisation, et une pièce (1b) de raccordement,
la pièce (1a) collectrice ayant une forme qui est essentiellement adaptée ou adaptable à la forme du récipient (2) et
la pièce (1b) de raccordement s'effilant vers le haut en face de la pièce (1a) collectrice et comportant au moins un moyen (3) de raccordement pour raccorder l'insert (1) de façon étanche avec un embout (7) d'évacuation du marc de la machine à café.

2. Insert selon la revendication 1, **caractérisé en ce que** le ou les moyen(s) (3) de raccordement est/sont sélectionné(s) parmi une bande adhésive à l'intérieur de la pièce (1b) de raccordement sur ou en proximité de son extrémité supérieure, une bande de traction, un fil ou une bande élastique qui peut être guidé(e) autour de la circonférence de l'embout (7), un anneau avec un diamètre intérieur essentiellement correspondant au diamètre extérieur de l'embout (7), et des combinaisons de ceux-ci.

3. Insert selon la revendication 2, **caractérisé en ce que** le suivant est prévu comme moyen (3) de raccordement :
a) une bande de traction ou un fil, au moins partiellement intégré(e) dans ou passé(e) à travers de la paroi de la pièce (1b) de raccordement ; ou
b) une bande élastique sur la face extérieure de la pièce (1b) de raccordement ; ou
c) un anneau sur la face extérieure de la pièce (1b) de raccordement, qui a un diamètre intérieur correspondant essentiellement à la somme du diamètre extérieur de l'embout (7) et l'épaisseur de la paroi de la pièce (1b) de raccordement.

4. Insert selon la revendication 3, élément c), **caractérisé en ce que** l'anneau (3) est raccordé de façon détachable avec la face extérieure de l'insert avant l'utilisation de celui-ci et peut être déplacé par rapport à l'insert après dégagement de ce raccordement.

5. Insert selon la revendication 4, **caractérisé en ce que** le raccordement détachable est un raccordement adhésif.

6. Insert selon la revendication 3, élément c), **caractérisé en ce que** l'anneau (3) est fermement relié avec l'extrémité de la pièce (1b) de raccordement et peut être remonté sur l'embout (7) avec celle-ci.

7. Insert selon la revendication 6, **caractérisé en ce que** l'anneau (3) appartient à un élément destiné à fixer l'insert sur un support correspondant de la machine à café ou **en ce qu'**il est fermement relié avec un tel élément.

8. Insert selon la revendication 7, **caractérisé en ce que** ledit élément est adapté pour être inséré dans le support de la machine à café.

9. Insert selon la revendication 8, **caractérisé en ce que** ledit élément est ou comporte une plaque et **en ce que** l'anneau est formé dans celle-ci comme évidement circulaire.

10. Insert selon une quelconque des revendications 2 à 9, **caractérisé en ce qu'**au moins une bande adhésive, protégée par un film qui peut être détaché au moment de l'utilisation, est prévue comme moyen (3) de raccordement.

11. Insert selon une quelconque des revendications précédentes, **caractérisé en ce qu'**il est composé au moins essentiellement d'un matériau de papier, de tissu ou polymérique thermorésistant et résistant à l'humidité ou d'un mélange de ceux-ci.

12. Insert selon la revendication 5, **caractérisé en ce que** le matériau est biodégradable.

13. Insert selon les revendications 11 ou 12, **caractérisé en ce que** le matériau est essentiellement étanche à l'air.

14. Insert selon la revendication 13, **caractérisé en ce que** le matériau comprend un film en plastique essentiellement étanche à l'air.

15. Insert selon une quelconque des revendications 11 à 14, **caractérisé en ce que** le matériau comporte une imprégnation ou une couche antimicrobienne au moins dans la région de la pièce (1a) collectrice.
